# EUROPÄISCHE PATENTSCHRIFT

(11) **EP 1 323 961 B1**
(45) Veröffentlichungstag und Bekanntmachung des Hinweises auf die Patenterteilung: **01.06.2005**
(21) Anmeldenummer: 02026037.8
(22) Anmeldetag: 21.11.2002
(51) Int. Cl.: F16J 15/38, F16J 15/34

(54) **Gleitringdichtungsanordnung**
Face seal
Garniture à annaux de glissement

(30) Priorität: 27.12.2001 DE 20120966 U
(43) Veröffentlichungstag der Anmeldung: 02.07.2003
(73) Patentinhaber: Burgmann Dichtungswerke GmbH & Co. KG, 82515 Wolfratshausen (DE)
(72) Erfinder: Feigl, Peter, 82335 Höhenrain (DE)
(74) Vertreter: Schmidt, Horst, Dr.

(56) Entgegenhaltungen:
- EP-A- 0 005 159
- EP-A- 1 024 319
- DE-A- 3 927 589
- DE-U- 7 404 061
- SU-A- 723 276

## Beschreibung

Die Erfindung betrifft eine Gleitringdichtungsanordnung zur Abdichtung einer Welle gegenüber einem Gehäuse mit einem Paar zusammenwirkender Gleitringe gemäss dem Oberbegriff des Patentanspruchs 1.

Die Erfindung betrifft insbesondere ein Gleitringdichtungsanordnung mit Montagehilfe, die es erleichtert, die Gleitringdichtungsanordnung auf einer Welle zu montieren. Eine bekannte Gleitringdichtungsanordnung der gattungsgemässen Art (DE-A-3318296) hat als Montagehilfe eine Hülse, auf deren äusseren Umfang ein an einer Montagebrille gehaltener Gleitring aufgesetzt ist, der den drehfesten Gleitring einer Gleitringpaarung darstellt. Die Montagebrille ist ferner Träger diverser Zusatzeinrichtungen, wie einer Vorspanneinrichtung und Sekundärdichtungseinrichtung. Die Hülse zusammen mit dem Gleitring und der Montagebrille kann auf eine Welle aufgeschoben und nach Befestigung der Montagebrille an einem Gehäuse aus dem Gleitring herausgezogen werden. Auf der Hülse kann ferner endseitig der rotierende Gleitring mit Friktionssitz aufgesetzt sein, wobei dieser Gleitring seine endgültige betriebsmässige Ausrichtung zum drehfesten Gleitring erst bei der Eingriffnahme mit der Welle, nicht dagegen schon zuvor mittels der Hülse erfährt. Die Hülse stellt daher in erster Linie eine Montagehilfe für weniger geschultes Personal dar. Eine automatisierte Montage der Gleitringdichtungsanordnung im Zuge einer Fliessbandfertigung von Gerätschaften ist damit nicht zu bewerkstelligen. Bekannt ist ferner (EP-A-1024319) eine als montagefertige Einheit ausgebildete Gleitringdichtungsanordnung, die zwar für den Einsatz bei der Fliessbandfertigung von Gerätschaften geeignet ist, jedoch einen komplizierten Aufbau hat und daher teuer in der Fertigung ist. Eine Montagehilfe ist nicht vorgesehen.

Der Erfindung liegt die Aufgabe zugrunde, eine Gleitringdichtungsanordnung der gattungsgemässen Art mit Montagehilfe zu schaffen, die einen einfachen, preisgünstigen Aufbau haben soll und sich für den Einsatz bei vollautomatischer Fliessbandfertigung von Gerätschaften eignet. Die Gleitringdichtungsanordnung soll insbesondere für den Einsatz bei Kältemittelkompressoren für Klimaanlagen von Kraftfahrzeugen mit CO₂ als Kältemittel mit entsprechend hohen abzudichtenden Drücken geeignet sein.

Diese Aufgabe wird erfindungsgemäss durch die Massnahmen gemäss dem Patentanspruch 1 gelöst. Danach umfasst die Gleitringdichtungsanordnung einen Montageteil, auf dem die zusammenwirkenden Gleitringe in ihrer gegenseitigen betriebsmässigen Lagebeziehung angeordnet und gehalten sind, indem die Gleitringe nicht nur radial durch die radialen Abmessungen des Montageteils, sondern ferner zwischen einem Paar axial beabstandeter Axialanschläge axial lagefixiert sind. Der Montageteil gibt daher die gewünschte endgültige radiale und axiale Ausrichtung der Gleitringe vor, ohne dass diese für die Funktion der Gleitringdichtungsanordnung wesentlichen Faktoren der Mithilfe geschulten Personals bedarf. Damit ermöglicht die Erfindung die betriebsbereite Montage der Gleitringdichtungsanordnung mittels automatischer Robotermontagemaschinen oder dgl., so dass der Montagevorgang als Schritt in einer Fliessbandfertigung eingegliedert werden kann. Der Montageteil kann nach dem Anbringen der Gleitringdichtungsanordnung an der betreffenden Stelle der abzudichtenden Gerätschaft problemlos weggenommen werden, indem auf den Montageteil eine axiale Kraft ausgeübt wird, die bewirkt, dass einer der die Gleitringe lagefixierenden Axialanschläge aus der Anschlagposition in eine Freigabeposition bewegt wird. Dadurch wird die gewünschte genaue radiale und axiale Ausrichtung der Gleitringe nicht beeinträchtigt, da das Herausziehen des Montageteiles keinen Einfluss mehr auf die Ausrichtung der Gleitringe ausübt, sobald diese an der Montagestelle montiert sind. Der Montageteil selbst kann ein wiederverwendbares Formteil sein, das vorzugsweise preisgünstig durch Spritzgiessen eines Kunststoffmaterials gefertigt werden kann. Die Erfindung bietet ferner den Vorteil, dass die Gleitringdichtungsanordnung einen unkomplizierten und damit preisgünstigen Aufbau aufweisen kann, da Montagebrillen oder Dichtungsgehäuse, die bislang erforderlich waren, um die Gleitringe zu fixieren, wegfallen, indem diese Funktion vom Montageteil übernommen wird. Demzufolge stellt die Gleitringdichtungsanordnung gemäss einer bevorzugten Ausführungsform der Erfindung eine Montageeinheit dar, die ausser den radial und axial zueinander ausgerichteten Gleitringen Zusatzeinrichtungen, wie Mittel zur drehmomenübertragenden Kopplung des rotierenden Gleitringes mit der Welle, Sekundärdichtungsmittel, wie O-Ringe, sowie geeignete Vorspannmittel, wie eine Tellerfeder, umfassen können. Träger dieser Zusatzeinrichtungen ist der rotierende Gleitring, so dass die Zusatzeinrichtungen bei der Montage in ihren betriebsmässigen Lagen gehalten und in die ihnen zukommenden Funktionszustellungen versetzt werden können, ohne dass die lagemässige Zuordnung der Gleitringe untereinander hierdurch beeinflusst wird oder involviert ist.

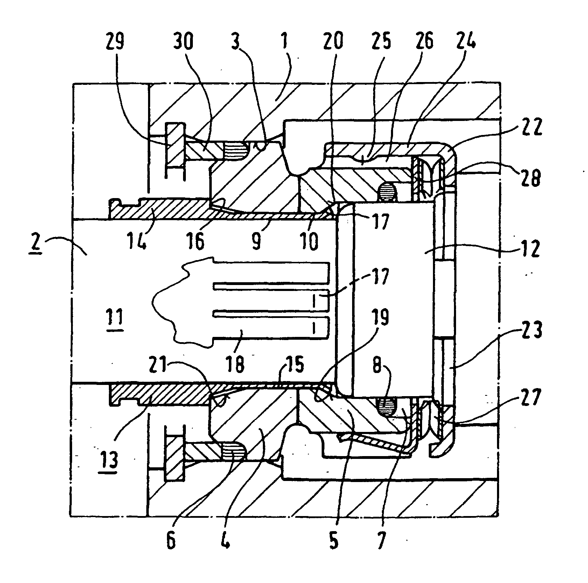

Die Erfindung wird nachfolgend anhand der Zeichnung und einer Ausführungsform näher erläutert. Die Zeichnung zeigt eine erfindungsgemäss aufgebaute Gleitringdichtungsanordnung in längsgeschnittener Ansicht.

Mit dem Bezugszeichen 1 ist - in der Zeichnung fragmentarisch gezeigt - das Gehäuse einer abzudichtenden Gerätschaft, z.B. eines Kältemittelkompressors für die Verdichtung eines Kältemittels, wie CO₂, und mit dem Bezugszeichen 2 eine durch eine Gehäusebohrung 3 geführte Welle, z.B. eine Kompressorantriebswelle, bezeichnet. Eine Gleitringdichtungsanordnung ist vorgesehen, um die Welle 2 gegenüber der Gehäusebohrung 3 abzudichten. Es versteht sich, dass die Erfindung nicht auf das genannte Anwendungsgebiet beschränkt ist, sondern Vorteile immer dann bietet, wenn die Montage einer Gleitringdichtungsanordnung vorzugsweise automatisch, z.B. mittels sog. Robotermontageautomaten, vorgenommen werden soll und dabei eine bestimmte gegenseitige Lagebeziehung der Aufbauteile der Gleitringdichtungsanordnung mit einem hohen Grad an Genauigkeit eingehalten und aufrechterhalten werden muss.

Die Gleitringdichtungsanordnung umfasst ein Paar zusammenwirkende Gleitringe 4, 5, von denen der eine Gleitring 4 zur drehfesten Montage am Gehäuse 1 und der andere Gleitring 5 zur gemeinsamen Drehung mit der Welle 2 vorgesehen ist. In einer Nut am äusseren Umfang des drehfesten Gleitringes 4 ist ein O-Ring 6 eingelegt, mit dessen Hilfe der drehfeste Gleitring 4 gegenüber der Gehäusebohrung 3 abgedichtet werden kann. Der gemeinsam mit der Welle 2 rotierende Gleitring 5 enthält eine axiale Ausnehmung 7 in der der Welle 2 zugewandten Umfangsfläche, in der ein weiterer O-Ring 8 einliegt, der eine Abdichtung zwischen dem rotierenden Gleitring 5 und der Welle 2 schafft. Die Gleitringe 4, 5 haben einander zugewandte radiale Dichtflächen, zwischen denen bei Betrieb ein einen berührungslosen Lauf der Gleitringdichtungsanordnung schaffender Dichtspalt gebildet wird. Die Gleitringe 4, 5 und insbesondere deren Bohrungen 9, 10, durch die die Welle 2 hindurchgeführt ist, müssen axial und radial genau zueinander ausgerichtet sein. Der vorbeschriebene grundsätzliche Aufbau der Gleitringdichtungsanordnung ist bekannt, so dass sich eine Beschreibung weiterer Details erübrigt.

Die Welle 2 hat einen Abschnitt 11 mit einem verkleinerten Durchmesser und einen Abschnitt 12 mit einem vergrösserten Durchmesser. Der rotierende Gleitring 5 hat eine Querschnittausbildung, dass er benachbarte Bereiche der Wellenabschnitte 11, 12 aussenumfänglich umfassen kann.

Ein Montageteil 13, der in Gestalt einer Hülse oder eines Rohrabschnittes ausgebildet sein kann, ist vorgesehen, um die gegenseitige axiale und radiale Lagebeziehung der Gleitringe 4, 5 vor und während der Montage der Gleitringdichtungsanordnung aufrechtzuerhalten. Der Montageteil 13 umfasst einen axialen äusseren Abschnitt 14, der ausserhalb der Bohrungen 9, 10 der Gleitringe 4, 5 liegt und eine Wandstärke hat, die dem aussenliegenden Abschnitt 14 eine ausreichende Steifigkeit verleiht. Der Montageteil 13 umfasst ferner einen innerhalb der Bohrungen 9, 10 liegenden inneren Abschnitt 15 mit einer verringerten Wandstärke, die einem gewünschten Betriebsspalt zwischen den Bohrungen 9, 10 der Gleitringe 4, 5 und dem Wellenabschnitt 11 entspricht, der nach der Montage der Gleitringdichtungsanordnung zwischen den Bauteilen vorzusehen ist und nach Entfernen des Montageteiles 13 verbleibt .

Ein erster Axialanschlag 16 in Gestalt einer Schulter ist am Übergang zwischen den inneren und äusseren Abschnitten 14, 15 des Montageteiles 13 und ein zweiter Axialanschlag 17 am oder nahe dem Ende des inneren Abschnitts 15 vorgesehen, dass dem Übergang abgewandt ist. Der rotierende Gleitring 5 ist am zweiten Axialanschlag 17 und der drehfeste Gleitring 4 am ersten Axialanschlag 16 abgestützt. Auf diese Weise sind die Gleitringe 4, 5 in ihrer gegenseitigen axialen und radialen Lagebeziehung durch den Montageteil 13 genau fixiert und es wird diese Lagebeziehung bei einem späteren Montagevorgang unverändert beibehalten.

Der zweite Axialanschlag wird durch eine Vielzahl radial nach aussen von federnden Elementen in Gestalt von Zungen 18, die am inneren Abschnitt 15 des Montageteiles 13 vorgesehen sind, abstehende und in Umfangsrichtung zueinander ausgerichtete radiale Erweiterungen oder Nocken 17 gebildet. Jeder Nocken 17 kann mit einer schrägeb Schulterfläche 20 des rotierenden Gleitringes 5 in eine hintergreifende Beziehung treten. Die Schulterfläche 20 ist am Übergang zwischen der Bohrung 10 und einer den Wellenabschnitt 12 aufnehmenden erweiterten Bohrung des rotierenden Gleitringes 5 vorgesehen. Jeder Nocken 17 kann eine Schrägfläche 19 aufweisen, die komplementär zu der Schulterfläche 20 des rotierenden Gleitringes 5 ausgebildet ist, so dass die Flächen 19, 20 aufeinander abgleiten können.

Die Eingriffnahme der Nocken 17 mit der Schulterfläche 20 bewirkt einesteils eine axiale kraftschlüssige Abstützung des rotierenden Gleitringes 5, so dass dieser an einer axialen Bewegung weg vom drehfesten Gleitring 4 gehindert ist. Andererseits wird hierdurch die Möglichkeit geschaffen, dass der Montageteil 13 nach erfolgter Montage der Gleitringdichtungsanordnung aus den Bohrungen 9, 10 der Gleitringe 4, 5 herausgezogen werden kann. Um das Herausziehen zu erleichtern, sind die federnden, an ihren freien Enden die Nocken 17 tragenden Elemente oder Zungen 18 vorgesehen, indem diese aus der Anschlagposition radial nach innen ausfedem können, wenn beim Herausziehen des Montageteiles 13 infolge der Bewegung der Nocken 17 längs der Schulterfläche 20 eine radiale Kraftkomponente auf die Nocken 17 und damit die federnden Zungen 18 ausgeübt wird. Solange diese Kraft nicht wirkt, sind die Nocken 17 durch die federnden Zungen 18 in der Anschlagposition gehalten. Die federnden Zungen 18 können durch eine Vielzahl umfänglich verteilt angeordneter in den inneren Abschnitt 15 des Montageteils 13 eingebrachter axialer Einschnitte gebildet sein. Statt einer Vielzahl federnder Zungen 18 könnte auch nur ein Paar derartiger Zungen von diametral gegegenüberliegenden Bereichen des inneren Abschnitts 15 axial abstehen. Auch könnte der gesamte in den Bohrungen 9, 10 einliegende inneren Abschnitt 15 des Montageteils 13 in Gestalt von zwei oder mehreren umfänglich verteilt angeordneten Kragarmen gebildet sein, die eine strukturell bedingte federnde Eigenschaft besitzen.

Die Bohrung 9 des drehfesten Gleitringes 4 kann nahe dem vom rotierenden Gleitring 5 abgewandten Ende konisch erweitert sein, wie dies bei 21 angedeutet ist, um das Einführen des Abschnitts 15 des Montageteils 13 mit den daran vorgesehenen, radial nach aussen abstehenden Nocken 17 zu erleichtern.

Die Gleitringdichtungsanordnung wird ferner komplettiert durch eine Mitnehmereinrichtung in Gestalt eines Mitnehmergehäuses oder -bügels 22, um die Drehbewegung der Welle 2 auf den rotierenden Gleitring 5 zu übertragen. Das Mitnehmergehäuse 22 umfasst einen radialen Bereich 23 mit einen Mitnehmervorsprung 25, der in eine axiale Nut 26 im äusseren Umfang des rotierenden Gleitringes 5 drehkraftübertragend eingreift, und einen vom äusseren Umfang des radialen Bereichs 23 axial abstehenden Bereich 24. Der radiale Bereich 23 des Mitnehmergehäuses 22 enthält eine Vielecköffnung, in die ein entsprechend gestalteter Vieleckabschnitt der Welle 2 eingreifen kann, um eine kuppelnde Beziehung zwischen dem Mitnehmergehäuse 22 und der Welle 2 zu schaffen. Das Mitnehmergehäuse 22 hat um ein geeignetes Mass kleinere radiale äussere Abmessungen als die des drehfesten Gelitringes 4.

Vorgesehen ist ferner eine Vorspanneinrichtung 27 in Gestalt einer Tellerfeder, die sich mit einem axialen Ende am Mitnehmergehäuse 22 und am anderen axialen Ende an einem Stützring 28 mit Clip abstützt, der am rotierenden Gleitring 5 mittels des Clips montiert werden kann und an der Stirnseite des Gleitringes 5 anliegt, die vom drehfesten Gleitring 4 abgewandt ist. Gleichzeitig verschliesst der Stützring 28 das äussere axiale Ende der den O-Ring 8 aufnehmenden Ausnehmung 7, so dass der O-Ring 8 an einem Herausgelangen aus der Ausnehmung 7 gehindert ist.

Zur Montage der wie vorbeschrieben aufgebauten Gleitringdichtungsanordnung, bei der die Gleitringe 4, 5 durch den in die Bohrungen 9, 10 eingeführten Abschnitt 15 des Montageteiles 13 in einer genauen radialen und axialen Lagebeziehung zueinander gehalten sind, wobei sich die Gleitringe 4, 5 an den Axialanschlägen 16, 17 abstützen und der rotierende Gleitring 5 Träger des Mitnehmergehäuses 22, des O-Ringes 8, der Vorspanneinrichtung 27 und des Stützringes 28 ist, wird diese als Montageeinheit auf der Welle 2 aufgesetzt und axial vorgeschoben, bis die Vielecköffnung im Mitnehmergehäuse 22 in kuppelndem Eingriff mit dem entsprechend gestalteten Vieleckabschnitt der Welle 2 tritt, wobei bei diesem Vorgang die Vorspanneinrichtung 27 um ein geeignetes Mass zusammengedrückt wird, um eine axiale Vorspannkraft auf den rotierenden Gleitring 5 auszuüben. Dann wird ein Sprengring 29 in einer in der Gehäusebohrung 3 vorgesehenen Nut eingesetzt, an dem sich der drehfeste Gleitring 4 axial abstützen kann, um die durch den anfänglichen Montageschritt eingenommene Position der Gleitringdichtungsanordnung gegenüber der Welle 2 lagemässig zu fixieren. Wenn erwünscht, kann zwischen dem Sprengring 29 und dem drehfesten Gleitring 4 ein Abstandsring 30 vorgesehen sein, der gleichzeitig dazu dienen kann, um den O-Ring 6 axial vorzuspannen, wodurch die Dichtung des drehfesten Gleitringes 4 gegenüber der Gehäusebohrung 3 verbessert wird. Danach kann an den Montageteil 13 eine äussere Axialkraft mit einer ausreichenden Stärke angelegt werden, die bewirkt, dass die Nocken 17 auf der Schulterfläche 20 abgleiten, um die Nocken 17 aus der hintergreifenden Beziehung mit dem rotierenden Gleitring 5 heraus zu bewegen. Der Montageteil 13 kann auf diese Weise aus den Bohrungen 9, 10 der Gleitringe 4, 5 herausgezogen werden, wobei die vorgegebene radiale und axiale Ausrichtung der Gleitringe 4, 5 erhalten bleibt.

Die Erfindung schafft daher die Möglichkeit, die Gleitringdichtungsanordnung in einem automatischen Montagebetrieb mittels bekannter Robotermontagemaschinen zu montieren, wobei dabei ein hohes Mass an präziser Ausrichtung sowohl der Aufbauteile der Gleitringdichtungsanordnung untereinander als auch gegenüber der Welle eingehalten wird.

Der Montageteil 13 kann ein Formteil aus einem geeigneten metallischen Material sein. Der Montageteil ist jedoch vorzugsweise ein Formteil aus einem geeigneten, ggf. faserverstärten Kunststoffmaterial, wie Polyamid, welches sich durch Spritzgiessen preisgünstig und in grosser Stückzahl wirtschaftlich herstellen lässt. Der Montageteil ist grundsätzlich wiederverwendbar, indem er nach Entfernung aus den Bohrungen einer Gleitringdichtungsanordnung in die Bohrungen einer anderen erfindungsgemässen Gleitringdichtungsanordnung eingesetzt werden kann.

Die Erfindung wurde vorausgehend in Verbindung mit verschiedenen Zusatzausrüstungen, wie einem Mitnehmergehäuse, einer Vorspanneinrichtung, einem Stützring, einem O-Ring beschrieben, die sämtlich nicht unmittelbar durch den Montageteil in ihrer lagemässigen Zuordnung zum rotierenden Gleitring gehalten sind und daher beim anfänglichen Einführen des Montageteiles in die Bohrungen der Gleitringe keinen axialen Belastungen ausgesetzt werden. Dies bietet Vorteile bei der Montage der Gleitringdichtungsanordnung auf einer Welle.

Es versteht sich, dass die Erfindung nicht auf die beschriebenen und gezeigten Zusatzausrüstungen beschränkt ist, sondern auch andere geeignete derartige Mittel vorgesehen werden können. Ferner brauchen die die Abdichtung der Gleitringe gegenüber der Gehäusebohrung bzw. der Welle bewirkenden Dichtmittel nicht in Gestalt von O-Ringen ausgebildet sein, sondern es können auch andere geeignete Sekundärdichtungen vorgesehen werden, wie sie dem Fachmann für diesen Zweck bekannt sind und nicht näher erläutert werden brauchen.

## Patentansprüche

1. Gleitringdichtungsanordnung zur Abdichtung einer Welle gegenüber einem Gehäuse mit einem Paar zusammenwirkender Gleitringe (4,5), von denen einer zur drehfesten Montage am Gehäuse und der andere zur gemeinsamen Drehung mit der Welle vorgesehen ist, wobei die Gleitringe Bohrungen (9,10) aufweisen, durch die bei Betrieb die Welle hindurchgeführt ist, wobei die Gleitringe durch ein in die Bohrungen eingreifendes Montageteil (13) in ihrer radialen Ausrichtung zur Welle gehalten sind, welches unter einer daran anlegbaren Axialkraft aus der Eingriffnahme mit den Bohrungen heraus bewegbar ist, **dadurch gekennzeichnet, dass** die Gleitringe (4,5) in ihrer gegenseitigen betriebsmässigen Lagebeziehung zwischen axial beabstandeten Axialanschlägen (16, 17) am Montageteil (13) lagefixiert sind, wobei der dem rotierenden Gleitring zugewandte Axialanschlag radial nachgiebig gehalten ist.

2. Gleitringdichtungsanordnung nach Anspruch 1, **dadurch gekennzeichnet, dass** der dem rotierenden Gleitring (5) zugewandte Axialanschlag (17) an einer Vielzahl von federnden Elementen (18) des Montageteils (13) vorgesehen ist.

3. Gleitringdichtungsanordnung nach Anspruch 1 oder 2, **dadurch gekennzeichnet, dass** der dem drehfesten Gleitring (4) zugewandte Axialanschlag (16) eine im wesentlichen verformungssteife Schulter am Montageteil (13) umfasst.

4. Gleitringdichtungsanordnung nach Anspruch 1, **dadurch gekennzeichnet, dass** die Bohrung (9) des drehfesten Gleitringes (4) an einem vom rotierenden Gleitring (5) abgewandten Endbereich konisch erweitert.

5. Gleitringdichtungsanordnung nach einem der vorhergehenden Ansprüche, **dadurch gekennzeichnet, dass** der Montageteil (13) einen in den Bohrungen (9,10) der Gleitringe (4,5) einsitzenden inneren Abschnitt (15) mit einer Wandstärke entsprechenden einem gewünschten Spiel zwischen der Welle und den Bohrungen hat.

6. Gleitringdichtungsanordnung nach einem der vorhergehenden Ansprüche, **dadurch gekennzeichnet, dass** der Montageteil (13) aus einem Kunststoffmaterial gebildet ist.

7. Gleitringdichtungsanordnung nach einem der Ansprüche 1 bis 5, **dadurch gekennzeichnet, dass** der Montageteil (13) aus einem metallischen Material gebildet ist.

8. Gleitringdichtungsanordnung nach einem der vorhergehenden Ansprüche, wobei diese ferner Mittel (22) zur drehmomentübertragenden Kopplung des rotierenden Gleitringes (5) mit der Welle, Sekundärdichtungsmittel (6,8), um den betreffenden Gleitring gegenüber dem Gehäuse bzw. der Welle abzudichten, und Vorspannmittel (27) zur Beaufschlagung der Gleitringe mit einer Vorspannkraft aufweisen, **dadurch gekennzeichnet, dass** diese als Montageeinheit ausgebildet ist, wobei die Kopplungsmittel, Sekundärdichtungsmittel und Vorspannmittel am rotierenden Gleitring (5) gehalten sind.

## Claims

1. A face seal device for sealing a shaft relative to a casing, including a pair of cooperating seal rings (4,5), one thereof being provided for non-rotational mounting on the casing and the other for common rotation with the shaft, said seal rings including bores (9,10) through which the shaft extends when in operation, said seal rings being held in radial alignment with the shaft by a mounting member (13) engaging in the bores, which can be withdrawn from engagement with the bores by an axial force applied to the mounting member, **characterized in that** said seal rings (4,5) are positioned in the operational positional relationship of each other between a pair of axially spaced axial stops (16,17) on the mounting member (13), whereby the axial stop facing the rotating seal ring being held in radially resilient manner.

2. The face seal device according to claim 1, **characterized in that** the axial stop (17) facing the rotating seal ring (5) is provided on a plurality of resilient elements (18) on the mounting member (13).

3. The face seal device according to claim 1 or 2, **characterized in that** the axial stop (16) facing the non-rotational seal ring (4) comprises a substantially rigid shoulder on the mounting member (13).

4. The face seal device according to claim1, **characterized in that** the bore (9) ofh the non-rotational seal ring (4) is enlarged conically at an end portion thereof remote from the rotating seal ring (5).

5. The face seal device according to anyone of the preceding claims, **characterized in that** the mounting member (13) has an inner portion (15) positioned in the bores (9,10) of the seal rings (4,5), said inner portion having a wall thickness corresponding to a desired clearance between the shaft and the bores.

6. The face seal device according to anyone of the preceding claims, **characterized in that** the mounting member (13) is formed of a plastics material.

7. The face seal device according anyone of the claims 1 to 5, **characterized in that** the mounting member (13) is formed of a metallic material.

8. The face seal device anyone of the preceding claims, and further including means (22) for coupling the rotating seal ring (5) to the shaft in torque conveying manner, secondary sealing means (6,8) for sealing the concerned seal ring relative to the casing or the shaft, respectively, and biasing means (27) for applying a bias force to said seal rings, **characterized in that** the face seal device being formed as a mounting unit in which the coupling means, the secondary sealing means and the biasing means being held on the rotating seal ring (5).

## Revendications

1. Garniture mécanique d'étanchéité pour l'étanchement d'un arbre vis-à-vis d'un boîtier, avec une paire de bagues glissantes coopérantes (4, 5) dont l'une est prévue pour être montée bloquée en rotation sur le boîtier et l'autre pour tourner conjointement avec l'arbre, sachant que les bagues glissantes présentent des perçages (9, 10) à travers lesquels est dirigé l'arbre en fonctionnement, sachant que les bagues glissantes sont maintenues dans leur orientation radiale par rapport à l'arbre par une pièce de montage (13) s'engageant dans les perçages, pièce qui peut être déplacée hors de son engagement avec les perçages sous l'action d'une force axiale qui peut y être appliquée, **caractérisée en ce que** les bagues glissantes (4, 5) peuvent être fixées quant à la relation mutuelle de leurs positions fonctionnelles entre des butées axiales (16, 17) axialement distantes sur la pièce de montage (13), sachant que la butée axiale tournée vers la bague glissante rotative est maintenue de manière radialement flexible.

2. Garniture mécanique d'étanchéité selon la revendication 1, **caractérisée en ce que** la butée axiale (17) tournée vers la bague glissante rotative (5) est prévue sur une pluralité d'éléments élastiques (18) de la pièce de montage (13).

3. Garniture mécanique d'étanchéité selon la revendication 1 ou 2, **caractérisée en ce que** la butée axiale (16) tournée vers la bague glissante bloquée en rotation (4) comprend un épaulement sensiblement rigide à la déformation sur la pièce de montage (13).

4. Garniture mécanique d'étanchéité selon la revendication 1, **caractérisée en ce que** le perçage (9) de la bague glissante bloquée en rotation (4) s'élargit coniquement dans une région terminale éloignée de la bague glissante rotative (5).

5. Garniture mécanique d'étanchéité selon l'une des revendications précédentes, **caractérisée en ce que** la pièce de montage (13) possède une partie intérieure (15) se logeant dans les perçages (9, 10) des bagues glissantes (4, 5) et ayant une épaisseur de paroi correspondant à un jeu souhaité entre l'arbre et les perçages.

6. Garniture mécanique d'étanchéité selon l'une des revendications précédentes, **caractérisée en ce que** la pièce de montage (13) est réalisée en un matériau plastique.

7. Garniture mécanique d'étanchéité selon l'une des revendications 1 à 5, **caractérisée en ce que** la pièce de montage (13) est réalisée en un matériau métallique.

8. Garniture mécanique d'étanchéité selon l'une des revendications précédentes, sachant qu'elle présente en outre des moyens (22) pour le couplage en transmission de couple de la bague glissante rotative (5) avec l'arbre, des moyens d'étanchéité secondaires (6, 8) pour l'étanchement de la bague glissante concernée vis-à-vis du boîtier ou respectivement de l'arbre, et des moyens de précontrainte (27) pour solliciter les bagues glissantes avec une force de précontrainte, **caractérisée en ce qu'**elle est conçue comme un ensemble monté, sachant que les moyens de couplage, les moyens d'étanchéité secondaires et les moyens de précontrainte sont maintenus sur la bague glissante rotative (5).
